(19) Europäisches Patentamt
European Patent Office
Office européen des brevets

(11) Publication number: 0 202 281 B1

# (12) EUROPEAN PATENT SPECIFICATION

(45) Date of publication of the patent specification: 02.11.88

(51) Int. Cl.⁴: C 04 B 24/12

(21) Application number: 85905802.6

(22) Date of filling: 02.11.85

(86) International application number: PCT/EP 85/00584

(87) International publication number: WO 86/02921 (22.05.86 Gazette 86/11)

## (54) ADDITIVE FOR HYDRAULIC CEMENT MIXES.

(30) Priority: 13.11.84 US 670772

(43) Date of publication of application: 26.11.86 Bulletin 86/48

(45) Publication of the grant of the patent: 02.11.88 Bulletin 88/44

(84) Designated Contracting States: AT BE CH DE FR GB IT LI LU NL SE

(56) References cited: US-A-4 064 191

(73) Proprietor: SANDOZ AG, Lichtstrasse 35, CH- 4002 Basel (CH)
(84) Designated Contracting States: BE CH FR GB IT LI LU NL SE

(73) Proprietor: SANDOZ- PATENT- GMBH, Humboldtstrasse 3, D-7850 Lörrach (DE)
(84) Designated Contracting States: DE

(73) Proprietor: SANDOZ- ERFINDUNGEN Verwaltungsgesellschaft m.b.H., Brunner Strasse 59, A-1235 Wien (AT)
(84) Designated Contracting States: AT

(72) Inventor: GERBER, Arthur, G., 36220 Churchill Drive, Solon, OH 44139 (US)

EP 0 202 281 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1988

**Description**

This invention relates to additive compositions, otherwise known as admixtures, for incorporation in hydraulic cement mixes, for example, hydraulic cement concretes, mortars, and grouts, neat cement mixes, concrete block mixes, and dry mixes for making such concretes, mortars, grouts, especially to accelerate their rate of hardening and setting.

A variety of techniques have been employed to accelerate the hardening of hydraulic cement mixes. The rate of hydration of portland cement is very dependent upon temperature, for example, so that concrete containing it will often harden at a slower rate than desired during the winter season unless provisions are made to accelerate the hardening process. Among the various techniques employed for this purpose are the increasing of the proportion of portland cement in the mix; the use of more rapid setting types of cements; the heating of the water and other components of the concrete; and the use of chemical admixtures which act, catalytically or otherwise, to increase the rate at which the concrete hardens.

A number of chemical agents that serve to accelerate the rate of hardening or concrete are known in the art. Calcium chloride in particular is well known as an effective and economic accelerator. In use, however, calcium chloride is known to have certain disadvantages; principally that at elevated usage rates it tends to promote corrosion of metal embedded in, or in contact with, the calcium chloride-containing concrete. Other agents which do not promote corrosion of metal, but have a less pronounced effect in accelerating the rate of hardening of concrete include: alkanolamines, aldehyde condensates of urea and melamine; formate salts; thiocyanates; carbonates and carbonyl compounds; and alkali-metal nitrates and thiocyanates.

Another use for chemical accelerators is to overcome retardation caused by strength enhancing admixtures. Many admixtures employed to achieve improved compressive strength are known to act also as set retarders, and such admixtures slow the chemical process of hydration so that the concrete remains plastic and workable for a longer time than concrete without such a retarder. While admixtures having set retarding and compressive strength improving properties are useful per se, there are frequently instances where improved compressive strength is desired but any significant retarding of the rate of hardening of the cement concrete mix would be undesirable. In such an instance, it is desirable to overcome the retarding effect by using accelerators.

It has now been found that N-methylol derivatives of glycoluril , are effective set accelerators in hydraulic mixes containing portland cement, either alone or in combination with other set accelerators for example metal salts and alkanolamines.

Accordingly, the present invention provides a hydraulic cement mix comprising hydraulix cement, aggregate, sufficient water to effect the hydraulic setting of the cement, and an additive comprising a poly(N-methylol)glycoluril of formula I

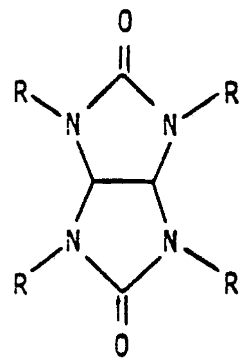

I

in which at least 2 of the groups R, more preferably 3 or 4 of the groups R are methylol groups, and the remaining R groups are hydrogen.

For the purposes of this specification, the term "hydraulic cement" is intended to mean and to include all cementitious compositions capable of being set and hardened by the action of water, such as portland cements, sulfate-resisting cements, blast-furnace slag cements, pozzolanic cements, and high alumina cements, since the admixture of the present invention can be incorporated into all hydraulic cement mixes. However, the preferred use of the present composition or admixture is in portland cement mortars and concretes. Also for the purposes of this invention, the term "portland cement", is intended to include all cementitious compositions which have a high content of calcium silicate and are portland cement or are chemically similar or analogous to it and are therefore portland cement type, the specification for which is set forth in American Society for Testing and Materials specification ASTM C 150-81. This would include portland cements in which fly ash, as from steam or power generating facilities, limestone, pozzolanic slag, as from blast furnaces, or mixtures of these, are incorporated, or portland blended cements such as those described in ASTM C 595-82.

The set accelerators of the invention may be used alone or in combination with one or more known set accelerators, preferably with one or more set accelerators selected from water-soluble inorganic salts and alkanolamines. Examples of inorganic salts are alkali metal or alkaline earth metal nitrates, nitrites, chlorides,

thiocyanates and formates, particularly nitrates and thiocyanates. Examples of alkanolamines are triethanolamine, diethanolamine and bicine (N')-di-β-hydroxyethylglycine). The total amount of admixture present is preferably up to 4.0 % by weight of the weight of the cement compopent of the mix, more preferably from 0.2 % to 2.5 % by weight. The polymethylolglycoluril is preferably used in an amount from 0.01 % to 0.25 % by weight of the weight of cement, more preferably 0,01 - 0,10 %.

A preferred hydraulic cement mix according to the invention includes a poly(N-methylol)glycoluril, preferably trimethylol or tetramethylol glycoluril; at least one inorganic salt preferably selected from calcium nitrate, sodium nitrate and sodium thiocyanate; and an alkanolamine. A particularly preferred mix contains as accelerator trimethylol or tetramethylol glycoluril , sodium or calcium nitrate, sodium thiocyanate and triethanolamine, the percentage by weight of the individual components based on the weight of the cement component of the mix being preferably 0.01 to 0.20; 0.025 - 4.0; 0.025 - 4.0 and 0.001 to 0.05.

The above preferred admixtures may be compounded in dry powder form for addition to a cement mix. Such mixtures of trimethylol or tetramethylol glycoluril with inorganic salts and alkanolamine preferably contain 1.0 6.0 %, more preferably 2.0 - 3.0 %, particularly 2.5 % by weight of the glycoluril component.

The poly(N-methylol)glycolurils are known compounds which may be obtained as described in US Patent 4 064 191.

It has been found that water reducers, i.e., admixtures that lower the mixing requirements of water for a given mix consistency, often also act as retarders which slow the chemical process of hydration of the portland cement so that the mix remains plastic and workable for a longer period of time. For this reason, set accelerators are often used together with water reducers in order to overcome the retarding tendency of the water reducer. The accelerator thus increases the rate of hydration for early strength development, while the lower water content of the mix results in an increase in the ultimate compressive strength of the hardened concrete. Low temperatures also effect the rate of hydration and early strength development of portland cement mixtures causing a significant decrease in both which leads to later setting times and lower early strength gain. Accordingly, in a further embodiment of the invention, the hydraulic cement mix contains, in addition to the admixtures described above, one or more water-reducing set retarders for example lignosulphonates, e.g. calcium, sodium and ammonium lignosulphonates.

It is also within the scope of the invention to incorporate other additions for the purpose for which they are normally employed in conventional hydraulic cement mixes containing the adducts of the present invention in the amounts indicated for the purpose of accelerating the rate of set of the concrete. Illustrations of the type of additions that may be thus employed are, for example, air-entraining agents, air-detraining agents, pozzolanic materials, fly ash, colouring materials, and water repellents.

The admixtures according to the invention are generally added to the cement mix as an aqueous solution, or alternatively may be added in dry powder form. The setting time which results from a particular admixture in accordance with the present invention will vary for specific applications depending upon the composition and concentration of the mixture, the water-cement ratio, the nature and quantity of aggregates used, the composition of the cement, and the temperature and other conditions under which the constituents are mixed and placed.

The present invention permits acceleration of the rate of set of hydraulic cement mixes, particularly at low temperatures without the corrosive effects associated with the use of high levels of calcium chloride. The accelerating admixtures of the present invention cause no reaction with ferrous metals and are thus suitable for use in connection with reinforced or prestressed concretes as well as in other applications involving a cement, mortar, or concrete-metal interface. Furthermore, no objectionable or toxic fumes are imparted to the concrete.

The following Examples illustrate the invention:

**Examples 1-4:** Use of N-methylolglycolurils alone as set accelerators

Four hydraulic cement mixes containing additives according to the invention are made up and compared for initial time of set (ASTM C 403-80, Standard Test Method for Time of Setting of Concrete Mixtures by Penetration Resistance) with a mix containing no accelerator (comparison mix A).

The same type and brand of cement was used in each mix, and the kind and proportion of coarse and fine aggregate employed were likewise substantially the same. The amount of water added in each instance was such as to produce concrete mixes of essentially the same consistency. initial temperature of the concrete and ambient temperature during the tests were 10° C.

The results are set forth in Table 1 below:

**Table 1**

| Ex. No. | Additive | Amount of Additive % by weight of Cement | Water Content % volume of mix | Air, Vol. % of Concrete | Initial Time of Set hr. |
|---|---|---|---|---|---|
| A | None | | 18,3 | 1,3 | 8 1/8 |
| 1. | Trimethylolglycoluril | 0,02 | 17,6 | 1,7 | 7 3/4 |
| 2. | do. | 0,07 | 17,3 | 1,7 | 7 1/8 |
| 3. | Tetramethylolglycoluril | 0,02 | 17,6 | 1,5 | 6 1/2 |
| 4. | do. | 0,07 | 17,6 | 1,7 | 6 3/4 |

Both N-methylolated amides are shown to provide substantial set acceleration as compared with hydraulic cement mixes containing no accelerator additive.

**Examples 5 - 13**

In the following experiments tetramethylolglycoluril (TMGU) or trimethylolglycoluril is added to a hydraulic cement mix containing other known concrete accelerators. The results of the tests at 10°C compared with an equivalent plain concrete mix, and mixes containing other accelerating additives known in the art are shown in Table 2 below.

**Table 2**

| Ex. No. | Additive | Amount of Additive (% by weight of Cement) | % volume of mix | Air, Vol. % of Concrete | Initial Time of Set hr. |
|---|---|---|---|---|---|
| B | None | | 18,7 | 1,8 | 8 3/4 |
| 5. | Tetramethylol-glycoluril (TMGU) | 0,05 | 18,2 | 1,8 | 6 7/8 |
| 6. | TMGU | 0,10 | 18,2 | 2,0 | 6 3/4 |
| C | Calcium nitrate | 0,50 | 18,4 | 1,8 | 7 3/4 |
| 7. | Calcium nitrate<br>TMGU | 0,50<br>0,01 | 18,7 | 1,8 | 6 3/4 |
| 8. | Calcium nitrate<br>TMGU | 0,50<br>0,05 | 18,2 | 1,8 | 5 1/4 |
| 9. | Calcium nitrate<br>TMGU | 0,50<br>0,10 | 18,3 | 1,9 | 5 1/8 |
| D | Sodium thiocyanate | 0,20 | 18,3 | 1,7 | 7 1/4 |
| 10. | Sodium thiocyanate<br>TMGU | 0,20<br>0,05 | 18,4 | 1,9 | 6 |
| 11. | Calcium nitrate<br>Sodium thiocyanate<br>TMGU | 0,50<br>0,20<br>0,05 | 18,3 | 1,9 | 4 5/8 |
| 12. | Calcium nitrate<br>Trimethylolgly-coluril | 0,50<br>0,05 | 18,4 | 1,7 | 5 1/2 |
| E | Calcium nitrate | 1,500 | 18,4 | 1 9 | 6 1/4 |
| 13. | Calcium nitrate<br>Trimethylolgly-coluril | 1,500<br>0,05 | 18,4 | 1.8 | 3 5/8 |

The results set forth in this table establish that the incorporation of tetramethylolglycoluril (TMGU) or trimethylolglycoluril in hydraulic cement mixes causes a significant increase of acceleration of the rate of set of the concrete. Furthermore, TMGU is especially effective when utilized in combination with other accelerators for concrete even at concentration levels as low as 0.01 percent by weight of cement. The accelerating effect is increased as the dosage of the amide employed is increased from 0.01 percent up to 0.10 percent by weight of cement. The TMGU is employed as an aqueous solution having a solids content of about 50 percent by weight without any objectionable toxic fumes or odor.

**Examples 14, 15**

In further tests it can be shown that TMGU is effective with increased weight percent of cement concentrations of many inorganic and organic accelerators well known in the art. Results of cold temperature concrete tests (10° C) are shown in the following Table 3.

**Table 3**

| Ex. No. | Additive | Amount of Additive % by weight of cement | Water Content % volume | Air, Vol. % of Concrete | Initial Time of Set hr. |
|---|---|---|---|---|---|
| A | None | | 18,3 | 1,3 | 8 1/8 |
| F | Calcium nitrate | 2.00 | | | |
| | Sodium thiocyanate | 0,20 | | | |
| | Triethanolamine | 0,01 | 17,6 | 1,7 | 4 1/4 |
| 14. | Calcium nitrate | 2,00 | | | |
| | Sodium thiocyanate | 0,20 | | | |
| | Triethanolamine | 0,01 | | | |
| | TMGU | 0,04 | 18,0 | 1,5 | 3 1/2 |
| 15. | Calcium nitrate | 0,800 | | | |
| | Sodium nitrite | 0,400 | | | |
| | Sodium Thiocyanate | 0,12 | | | |
| | Triethanolamine | 0,01 | | | |
| | TMGU | 0,04 | 17,8 | 2,1 | 4 3/4 |

**Examples 16 - 18**

Where there is no prohibition on the use of calcium chloride as an accelerating admixture for concrete, the adducts furnish, in combination with chlorides, more acceleration than chloride alone. Also, the combination of the accelerating agents of the present invention with water-reducing set retarding agents results in a concrete mix less retarding than a mix containing the water-reducing agent (WRA) alone. Table 4 contains the results of tests of concrete produced at 10° C. Table 5 contains the results of tests of concretes produced at 21° C.

**Table 4**

| Ex. No. | Additive | Amount of Additive (% by weight of Cement) | Water content % volume | Air, Vol. % of Concrete | Initial Time of Set hr. |
|---|---|---|---|---|---|
| G | None | | 18,1 | 1,4 | 8 7/8 |
| H | Calcium chloride | 0,25 | 17,5 | 1,5 | 7 1/2 |
| 16. | Calcium chloride | 0,25 | 17,5 | 1,5 | 6 5/8 |
| | TMGU | 0,02 | | | |
| 17. | Calcium chloride | 0,25 | | | |
| | TMGU | 0,02 | | | |
| | Bicine | 0,005 | 17,8 | 1,4 | 6 7/8 |

**Table 5**

| Ex. No. | Additive | Amount of Additive % by weight of cement | Water Content (gal/cu yd of concrete) | Air, Vol. % of Concrete | Initial Time of Set hr. |
|---|---|---|---|---|---|
| I | None | | 22,4 | 0,8 | 5 3/8 |
| J | WRA | 0,22 | 19,2 | 2,7 | 7 3/4 |
| 18. | WRA<br>Calcium nitrate<br>Sodium Thiocyanate<br>TMGU | 0,22<br>1,666<br>0,111<br>0,044 | 19,4 | 2,4 | 4 3/4 |

The incorporation of relatively small amounts of N-methylolated glycolurils results in an advantageous increase in the rate of hardening of hydraulic cement mixes. The use of such materials is free of corrosive effects and of undesirable evolution of toxic fumes which accompanies the use of any formaldehyde condensates when utilized in a concentrated solution at pH 4 - 7.

**Claims**

1. A hydraulic cement mix comprising hydraulic cement, aggregate, sufficient water to effect the hydraulic setting of the cement, and an additive comprising a poly(N-methylol)glycoluril of formula I

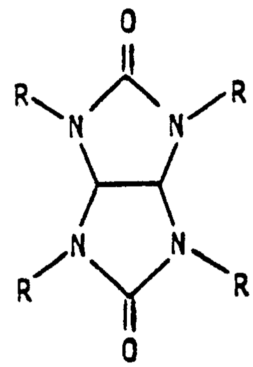

I

in which at least 2 of the groups R are methylol groups, and the remaining groups are hydrogen.

2. A hydraulic cement mix according to Claim 1 containing additionally one or more set accelerators selected from water-soluble inorganic salts and alkanolamines.

3. A hydraulic cement mix according to Claim 2 containing from 0,2 % to 2,5 % total admixture based on the weight of the cement component of the mix.

4. A hydraulic cement mix according to Claim 3 containing trimethylol- or tetramethylol glycoluril; sodium or calcium nitrate; sodium thiocyanate; and triethanolamine.

5. A hydraulic cement mix according to claim 4 in which the weight percentage of the individual admixture components based on the weight of the cement component of the mix is: trimethylol or tetramethylol glycoluril, 0,01 - 0,20 %; sodium or calcium nitrate, 0,025 - 4,0 %; sodium thiocyanate 0,025 - 4,0 %; triethanolamine 0,001 - 0,05 %.

6. A hydraulic cement mix according to any one of the preceding claims, containing a lignosulphonate water-reducing set retarder.

7. An admixture composition for addition to a hydraulic cement mix, said composition comprising trimethylol- or tetramethylolglycoluril, at least one inorganic salt selected from calcium nitrate, sodium nitrate and sodium thiocyanate, and an alkanolamine.

8. An admixture composition according to claim 7 comprising from 1 % to 6 % by weight of trimethylol- or tetramethylol glycoluril, together with sodium or calcium nitrate, sodium thiocyanate and triethanolamine.

9. A method for increasing the rate of setting of hydraulic cement comprising the step of adding to the hydraulic cement mix a poly(N-methylol)glycoluril of formula I

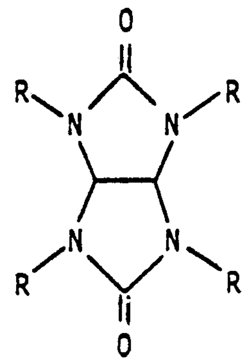

I

in which at least 2 of the groups R, more preferably 3 or 4 of the groups R are methylol groups, and the remaining R groups are hydrogen.

10. A method according to Claim 9 comprising the step of adding to the hydraulic cement mix from 0,01 % to 0,25 % of trimethylol or tetramethyol glycoluril by weight, based on the weight of the cement component of the mix.

**Patentansprüche**

1. Eine hydraulische Zementmischung enthaltend hydraulischen Zement, Aggregat, genügend Wasser, um den Zement hydraulisch auszuhärten, und ein Zusatzmittel, enthaltend ein Poly(N-methylol)-glycoluril der Formel I

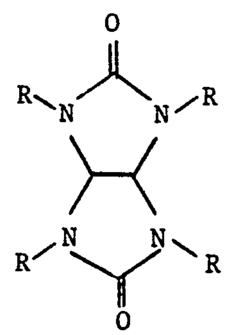

I

worin mindestens 2 Gruppen R Methylolgruppen und die übrigen Gruppen Wasserstoff sind.

2. Eine hydraulische Zementmischung gemäss Anspruch 1, welche zusätzlich eines oder mehrere Härtungsbeschleuniger aus der Gruppe der wasserlöslichen anorganischen Salze und der Alkanolamine enthält.

3. Eine hydraulische Zementmischung gemäss Anspruch 2, welche von 0,2 % bis 2,5 % Gesamtzusatzmittel, basierend auf das Gewicht der Zementkomponente in der Mischung, enthält.

4. Eine hydraulische Zementmischung gemäss Anspruch 3, enthaltend Trimethylol- oder Tetramethylolglycoluril, Natrium- oder Calciumnitrat, Natriumthiocyanat und Triäthanolamin.

5. Eine hydraulische Zementmischung gemäss Anspruch 4, worin die Gewichtsprozente der einzelnen Zusatz-Komponenten, basierend auf das Gewicht der Zementkomponente der Mischung, sind: Trimethylololder Tetramethylolglycoluril 0,01 - 0,20 %, Natrium- oder Calciumnitrat 0,025 - 4,0 %; Natriumthiocyanat 0,025 - 4,0 %, Triäthanolamin 0,001 - 0,05 %.

6. Eine hydraulische Zementmischung gemäss einem der vorangehenden Ansprüche, enthaltend ein Lignosulfonat als Wasser reduzierenden Härtungsverzögerer.

7. Ein Zusatzmittel für eine hydraulische Zementmischung, enthaltend Trimethylol- oder Tetramethylolglycoluril, mindestens ein anorganisches Salz aus der Gruppe Calciumnitrat, Natriumnitrat und Natriumthiocyanat, und ein Alkanolamin.

8. Ein Zusatzmittel gemäss Anspruch 7, enthaltend von 1 % bis 6 % (Gewicht) Trimethylol- oder Tetramethylolglycoluril zusammen mit Natrium- oder Calciumnitrat, Natriumthiocyanat und Triäthanolamin.

9. Ein Verfahren zur Beschleunigung der Härtung von hydraulischem Zement durch Zugabe zur hydraulischen Zementmischung eines Poly(N-methylol)-glycolurils der Formel I

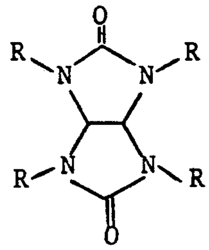

I

worin mindestens 2 der Gruppen R, vorzugsweise 3 oder 4 der Gruppen R Methylolgruppen und die übrigen Gruppen R Wasserstoff sind.

10. Ein Verfahren gemäss Anspruch 9 durch Zugabe zur hydraulischen Zementmischung von 0,01 % bis 0,25 % (Gewicht) Trimethylol- oder Tetramethylolglycoluril, basierend auf das Gewicht der Zementkomponente in der Mischung.

**Revendications**

1. Une gâchée de ciment hydraulique comprenant un ciment hydraulique, un agrégat, suffisamment d'eau pour effectuer la prise hydraulique du ciment et un additif comprenant un poly(N-méthylol)-glycolurile de formule I

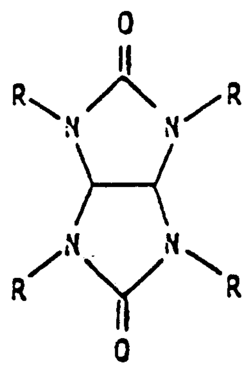

I

dans laquelle au moins 2 des groupes R signifient des groupes méthylol et les groupes restants signifient l'hydrogène.

2. Une gâchée de ciment hydraulique selon la revendication 1, contenant en plus un ou plusieurs accélérateurs de prise choisis parmi les sels minéraux et les alcanolamines solubles dans l'eau.

3. Une gâchée de ciment hydraulique selon la revendication 2, contenant au total de 0,2 % à 2,5 % d'adjuvant par rapport au poids du composant cimentaire de la gâchée.

4. Une gâchée de ciment hydraulique selon la revendication 3, contenant du triméthylol- ou du tétraméthylolglycolurile; du nitrate de sodium ou de calcium; du thiocyanate de sodium et de la triéthanolamine.

5. Une gâchée de ciment hydraulique selon la revendication 4, dans laquelle le pourcentage en poids des composants individuels de l'adjuvant par rapport au poids du composant cimentaire de la gâchée est: 0,01 - 0,20 % de triméthylol- ou de tétraméthylolglycolurile; 0,025 - 4,0 % de nitrate de sodium ou de calcium; 0,025 - 4,0 % de thiocyanate de sodium; 0,001 - 0,05 % de triéthanolamine.

6. Une gâchée de ciment hydraulique selon l'une quelconque des revendications précédentes, contenant un lignosulfonate retardateur de prise réducteur d'eau.

7. Une composition d'adjuvant pour l'addition à une gâchée de ciment hydraulique, ladite composition comprenant du triméthylol- ou têtraméthylolglycolurile, au moins un sel minéral choisi parmi le nitrate de calcium, le nitrate de sodium et le thiocyanate de sodium, et une alcanolamine.

8. Une composition d'adjuvant selon la revendication 7, comprenant de 1 % à 6 % en poids de triméthylol- ou de tétraméthylolglycolglycolurile, ensemble avec du nitrate de sodium ou de calcium, du thiocyanate de sodium et de la triéthanolamine.

9. Un procédé pour augmenter la vitesse de prise du ciment hydraulique, comprenant l'addition à la gâchée de ciment hydraulique d'un poly(N-méthylol)-glycolurile de formule I

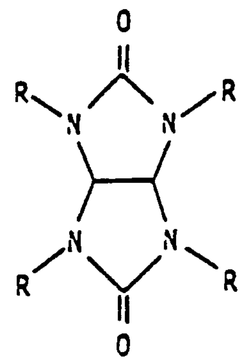

I

dans laquelle au moins 2 des groupes R, plus préférablement 3 ou 4 des groupes R signifient des groupes méthylol et les groupes R restants signifient l'hydrogène.

10. Un procédé selon la revendication 9, comprenant l'addition à la gâchée de ciment hydraulique de 0,01 % à 0,25 % en poids de triméthylol- ou de tetraméthylolglycolurile, par rapport au poids du composant cimentaire de la gâchée.